# EUROPEAN PATENT SPECIFICATION

(11) **EP 1 470 350 B1**
(45) Date of publication and mention of the grant of the patent: **07.06.2006**
(21) Application number: 03702493.2
(22) Date of filing: 21.01.2003
(51) Int. Cl.: F16H 61/00

(54) **SEALING MEANS FOR SEALING AN OUTER PART OF A COMPENSATION CHAMBER OF A PULLEY DEVICE FOR A CONTINUOUSLY VARIABLE TRANSMISSION**
DICHTUNGSVORRICHTUNG FÜR ÄUSSERES TEIL EINER DRUCKAUSGLEICHSKAMMER EINER RIEMENSCHEIBE EINES STUFENLOSEN GETRIEBES
MOYEN D'ETANCHEITE SERVANT A RENDRE ETANCHE UNE PARTIE EXTERIEURE D'UNE CHAMBRE DE COMPENSATION D'UN SYSTEME DE POULIE DESTINE A UNE TRANSMISSION A CHANGEMENTS DE VITESSES CONTINU

(30) Priority: 28.01.2002 EP 02075378
(43) Date of publication of application: 27.10.2004
(73) Proprietor: Van Doorne's Transmissie B.V., 5026 RA Tilburg (NL)
(72) Inventor: PENNINGS, Pieter, Antonius, Sebastianus, Maria, NL-4891 VD Rijsbergen (NL)
(74) Representative: Dekker-Garms, Alwine Emilie
(86) International application number: PCT/EP2003/000593
(87) International publication number: WO 2003/064894

(56) References cited:
- EP-A- 0 947 736
- EP-A- 1 156 235
- US-A- 4 552 545

## Description

The present invention relates to a pulley device for a continuously variable transmission, comprising: a shaft; a movable sheave being axially movable along the shaft; a cylinder being substantially coaxially arranged with regard to the shaft and being attached to the movable sheave; a plunger which at an outer periphery is sealed against an inner surface of the cylinder and which at an inner periphery encompasses the shaft at a fixed position with regard to the shaft; a balance shield which encompasses the shaft and which is having a fixed position with regard to the cylinder and the movable sheave, the balance shield being arranged such that the plunger is located between the balance shield and the movable sheave in an axial direction.

Such a pulley device is known in practice, and is an important part of a continuously variable transmission, since it determines the ratio of the continuously variable transmission. The pulley device has a primary part and a secondary part, both parts comprising a shaft, a stationary sheave and a movable sheave. The axial position of the movable sheave is determined by an hydraulic pressure in a cylinder space at a back side of the movable sheave, that is the side which is not facing the stationary sheave. The cylinder space is a.o. delimited by a plunger encompassing the shaft at a fixed position with regard to the shaft.

In order to compensate for pressure in the cylinder space being built up as a result of centrifugal forces, a compensation chamber is provided, usually only at the secondary part of the pulley device. The compensation chamber is separated from the cylinder space by means of the plunger. In some types of pulley devices, a filling hole is provided in the plunger for allowing fluid to flow from the cylinder space into the compensation chamber. In other types of pulley devices, fluid is supplied to the compensation chamber by means of a separate system which does not include the cylinder space.

The compensation chamber is a.o. delimited by a balance shield which at an inner periphery encompasses the shaft, and which has a fixed position with regard to the movable sheave. The balance shield is connected to the movable sheave through a cylinder being substantially coaxially arranged with regard to the shaft and being attached to a back side of the movable sheave. Usually, near an outer periphery, a front side of the balance shield contacts a step in an inner surface of the cylinder, and a back side of the balance shield contacts a snap ring being engaged with a ring groove in said inner surface.

In order to avoid the building up of pressure in another way than as a result of centrifugal forces, the compensation chamber is provided with a discharge hole for discharging fluid. Preferably, the discharge hole is located in the vicinity of the shaft, since at that position the centrifugal pressures are relatively low, taking into account the known quadratic relation between the centrifugal pressures and the radial position. In such case, the flow of fluid from the compensation chamber, which is the result from a difference between pressure inside the compensation chamber and pressure outside the compensation chamber, at the position of the discharge hole, is relatively low.

However, in practice it appears that besides the relatively low flow through the discharge hole another flow occurs, which leads to excessive fluid loss from the compensation chamber.

Excessive fluid loss from the compensation chamber is undesirable, since it influences the performance of the continuously variable transmission in a negative way. It will be understood that the fluid loss causes a certain drop in the pressure in the compensation chamber. Especially in case of high operation pressures, the problem arises that the supply of fluid to the compensation chamber is not sufficient to counterbalance the excessive fluid loss. As a result, the compensation chamber is not able to perform in a proper way its function of compensating for the additional pressure in the cylinder space which is the result of centrifugal forces.

In case of the fluid in the compensation chamber being provided by a separate system, fluid (e.g. oil) at a relatively low pressure, e.g. at only a few bar, can be utilized to minimize the loss of pressure and thus also the energy loss. However, this is not possible in case of the fluid being derived from the cylinder space through a filling hole in the plunger, since the fluid in the cylinder space is variably, but generally also highly pressurized, e.g. at 30 bar or more, and a considerable energy loss is associated with the pressurization of fluid when flowing from the cylinder space into the compensation chamber, which has a disadvantageous effect on the efficiency of the continuously variable transmission in which the pulley device is applied.

EP-A-0 947 736 discloses a pulley device having the features of the preamble of claim 1

It is an object of the present invention to provide for a simple and cheap solution for the above-mentioned problem of excessive fluid loss from the compensation chamber. This object is achieved by providing a pulley device with outer sealing means contacting the balance shield as well as the inner surface of the cylinder in a sealing manner.

In providing for sealing means between the balance shield and the inner surface of the cylinder, excessive loss of fluid from the compensation chamber is prevented. The radial position of the sealing means is such that it prevents a relatively very large flow of fluid from the compensation chamber from occurring, given the already-mentioned quadratic relation between the centrifugal pressures and the radial position.

In a preferred embodiment, the outer sealing means comprise an annular lip-seal. This is a relatively cheap solution, since it is not necessary to adapt the inner surface of the cylinder or the balance shield. Such adapting would be necessary in case of utilizing a common O-ring or the like, since in that case a ring groove in the inner surface of the cylinder would be needed for receiving the sealing ring.

Advantageously, the outer lip-seal is applied to the balance shield by means of vulcanizing. The outer lip-seal is then retained by the balance shield, and is automatically positioned and mounted when the balance shield is positioned and mounted.

The invention will now be explained in greater detail with reference to the non-restricting examples of embodiments shown in the figures, in which similar parts are indicated with the same reference signs, and in which:
figure 1 shows a sectional view of a secondary part of a pulley device for a continuously variable transmission;
figure 2 diagrammatically shows a portion of a secondary part of a pulley device according to a first preferred embodiment of the present invention;
figure 3 shows a detail A of the portion which is shown in figure 2; figure 4 diagrammatically shows a portion of a secondary part of a pulley device according to a second preferred embodiment of the present invention; and
figure 5 shows a detail B of the portion which is shown in figure 4.

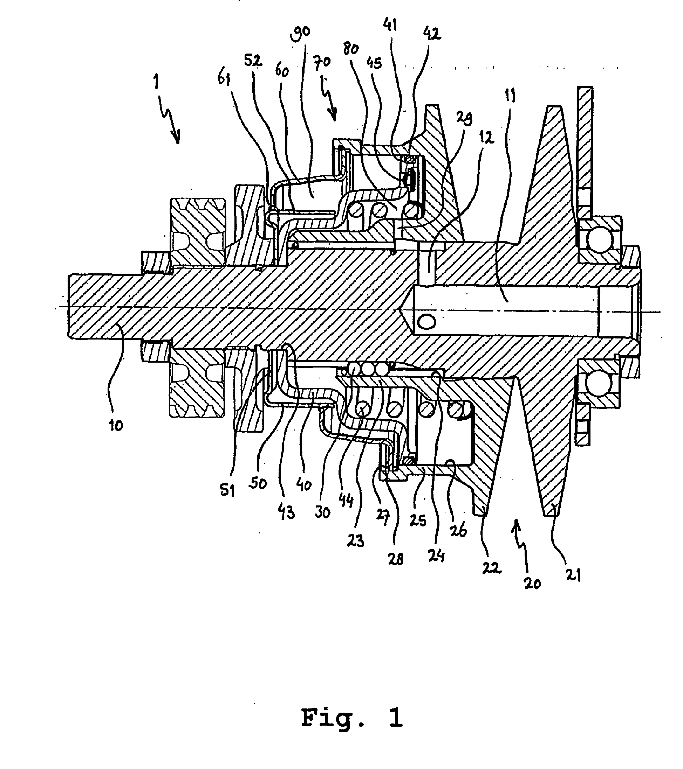

Figure 1 shows a secondary part 1 of a pulley device for a continuously variable transmission.

In the following, it is considered to be well known that a pulley device for a continuously variable transmission does not only have a secondary part 1, but also has a primary part (not shown). Further, it is considered to be well known that the pulley device comprises a push belt (not shown), which usually comprises metal rings and transverse elements being arranged thereon. Moreover, the way in which the pulley device as a whole operates and the way in which a ratio of the pulley device is continuously varied are considered to be well known, and will therefore not be explicitly described.

The secondary part 1 comprises a secondary shaft 10, which at one side is coupled to a load (not shown), for example the wheels of a vehicle. At another side, a secondary pulley 20 is arranged on the secondary shaft 10. The secondary pulley 20 comprises a stationary sheave 21 being integrally constituted with the secondary shaft 10 and a movable sheave 22 being axially movable along the secondary shaft 10. The sheaves 21, 22 have a conical shape and are disposed opposite to each other, thereby forming a V-shaped groove for receiving the above-mentioned push belt.

The stationary sheave 21 and the secondary shaft 10 do not necessarily have to be one integral part. The stationary sheave 21 can also be a separate element which is firmly attached to the secondary shaft 10 in any suitable way.

At the back side, that is the side which is not facing the stationary sheave 21, the movable sheave 22 is integrally connected to a cylinder-shaped slide part 23, an inner surface 24 of which is capable of sliding along the secondary shaft 10 through balls 30. Further, at the said side, the movable sheave 22 is integrally connected to a cylinder 25 which is substantially coaxially arranged with regard to the secondary shaft 10.

Both the slide part 23 and the cylinder 25 do not necessarily have to be integrally connected to the movable sheave 22. Instead, they can be separate elements which are attached to the movable sheave 22 in any suitable way.

The secondary part 1 further comprises a secondary plunger 40, which has a fixed and substantially coaxial position with regard to the secondary shaft 10. At an outer periphery 41, the secondary plunger 40 is sealed against an inner surface 26 of the cylinder 25 by means of an O-ring 42. At an inner periphery 43, the secondary plunger 40 encompasses the secondary shaft 10. A spring 44 is provided between the secondary plunger 40 and the movable sheave 22.

A compensation cylinder 50 having a partially closed head end 51 which is suitable for letting through the secondary shaft 10, also has a fixed and substantially coaxial position with regard to the secondary shaft 10. Said compensation cylinder 50 is disposed at the back side of the secondary plunger 40, that is the side of the secondary plunger 40 which is not facing the movable sheave 22. An annular space between the compensation cylinder 50 and the cylinder 25 is closed by means of a balance shield 60 having a z-shaped contour in an axial plane. At an inner periphery 61, the balance shield 60 encompasses a cylinder wall portion 52 of the compensation cylinder 50. The balance shield 60 has a fixed position with regard to the cylinder 25, and is movable with regard to the compensation cylinder 50. The fixed position of the balance shield 60 with regard to the cylinder 25 is maintained by means of a step in the cylinder 25 at the one side and a snap ring 27 being engaged with a ring groove 28 in the inner surface 26 of the cylinder 25 at the other side.

Within the scope of the present invention, the compensation cylinder 50 can be omitted. In such case, the balance shield 60 serves to close an annular space between the secondary plunger 40 and the cylinder 25. Further, the balance shield 60 does not necessarily need to have a z-shaped contour in an axial plane, but can have any possible suitable shape.

In the following, the movable sheave 22, the slide part 23, the cylinder 25 and the balance shield 60 are referred to as movable unit 70. A most backward position of the movable unit 70 is shown in the upper half of figure 1, whereas a most forward position of the movable unit is shown in the lower half of figure 1.

A cylinder space 80 at the back side of the movable sheave 22, which is delimited by the front side of the secondary plunger 40, the slide part 23 and, depending on the position of the movable sheave 22 with regard to the stationary sheave 21, possibly also a portion of the secondary shaft 10 and the inner surface 26 of the cylinder 25, is filled with fluid, which can be supplied or discharged by means of a system which comprises channels 11 and 12 extending through the secondary shaft 10 and a channel 29 extending through the slide part 23.

The position of the movable sheave 22 with regard to the stationary sheave 21 is controlled by means of the pressure in the cylinder space 80. When fluid is supplied to the cylinder space 80, the pressure in the cylinder space 80 increases, which causes the movable unit 70 to move in the direction of the stationary sheave 21. Conversely, when fluid is discharged from the cylinder space 80, the pressure in the cylinder space 80 decreases, which causes the movable unit 70 to move away from the stationary sheave 21.

A compensation chamber 90 which is delimited by the back side of the secondary plunger 40, the compensation cylinder 50, the balance shield 60 and, depending on the position of the movable unit 70 with regard to the stationary sheave 21, possibly also at least a portion of the cylinder 25, is also filled with fluid, which can be supplied by means of a filling hole 45 which is provided in the secondary plunger 40. Thus, in this example, the compensation chamber 90 is filled with fluid which is derived from the cylinder space 80. However, within the scope of the present invention, it is also possible that the fluid is supplied by means of an assigned system which does not include the cylinder space 80, e.g. through a separate supply channel being provided in the secondary shaft 10.

During operation of the continuously variable transmission, the cylinder space 80 receives a hydraulic pressure through the channels 11, 12 and 29. In this way, the axial position of the movable sheave 22 with regard to the stationary sheave 21 is controlled. In the process, additional pressure builds up as a result of centrifugal forces on rotation of the secondary pulley 20. Said additional pressure is being compensated for by allowing fluid from the cylinder space 80 to pass through the filling hole 45 and flow into the compensation chamber 90, where a similar centrifugal pressure may then be built up during operation. In this example, fluid can be discharged from the compensation chamber 90 by means of a discharge hole (not shown) being provided in the compensation cylinder 50, in order to avoid the building up of pressure in another way than as a result of centrifugal forces.

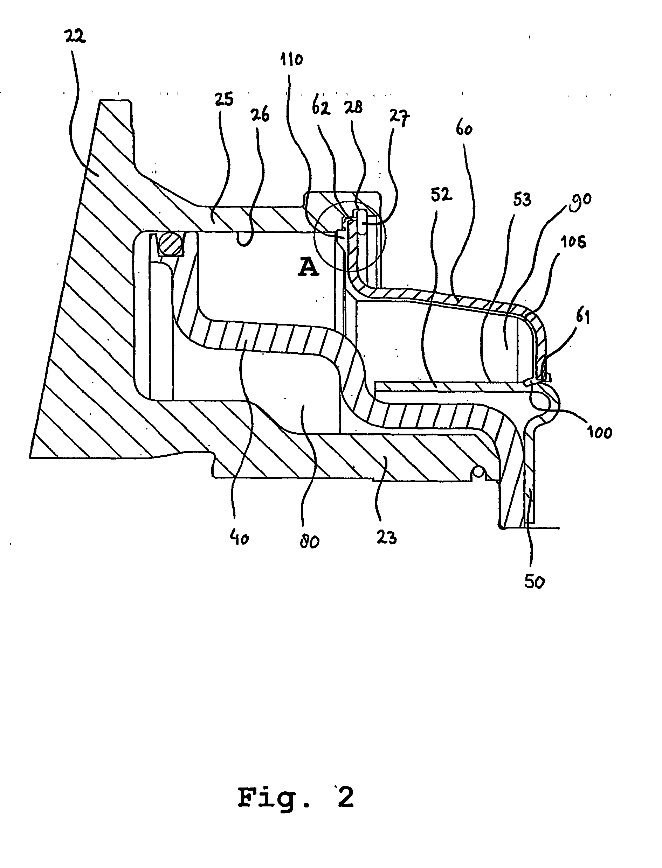

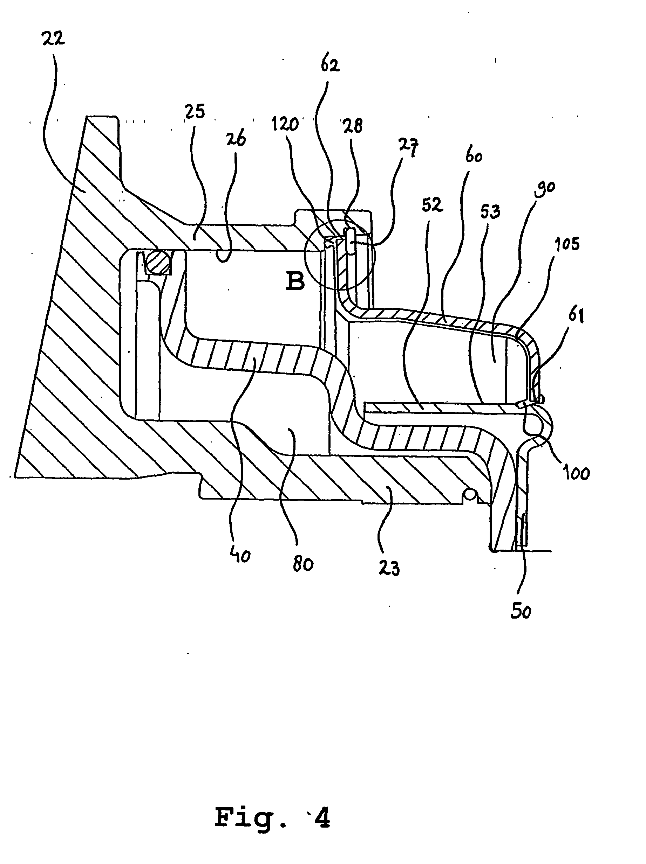

In the example shown in figure 2, the pulley device comprises a compensation cylinder 50, whereas in the example shown in figure 4, the compensation cylinder 50 has been omitted. In the first case, the balance shield 60 is sealed against an outer surface 53 of the cylinder wall portion 52 of the compensation cylinder 50 at its inner periphery 61, whereas in the second case, the balance shield 60 is sealed against the secondary plunger 40 at its inner periphery 61. In both cases, the sealing is realized by means of an annular lip-seal 100. In the shown examples, the inner lip-seal 100 is part of a layer 105 entirely covering the front side of the balance shield 60, that is the side which is facing the compensation chamber 90.

As can be derived from figures 2-5, in the shown examples, the inner surface 26 of the cylinder 25 is provided with two steps. Starting from the end of the cylinder 25 which is integrally connected to the movable sheave 22 and going in the direction of the free end of the cylinder 25, the inner surface 26 comprises near said free end a bevel 260 and subsequently a first step 261 wherein the inner diameter of the cylinder 25 increases, and close to said first step 261 a second step 262 wherein the inner diameter of the cylinder 25 also increases. In the shown examples, the second step 262 is part of the already mentioned ring groove 28 in which the snap ring 27 is mounted.

According to the present invention, the balance shield 60 is sealed against the inner surface 26 of the cylinder 25 near an outer periphery 62 by means of outer sealing means, which in the shown examples are also part of the layer 105.

Preferably, the layer 105, including the inner lip-seal 100 and the outer sealing means, is made of rubber. Advantageously, the layer 105, including the inner lip-seal 100 and the outer sealing means, is applied to the balance shield 60 by means of vulcanizing.

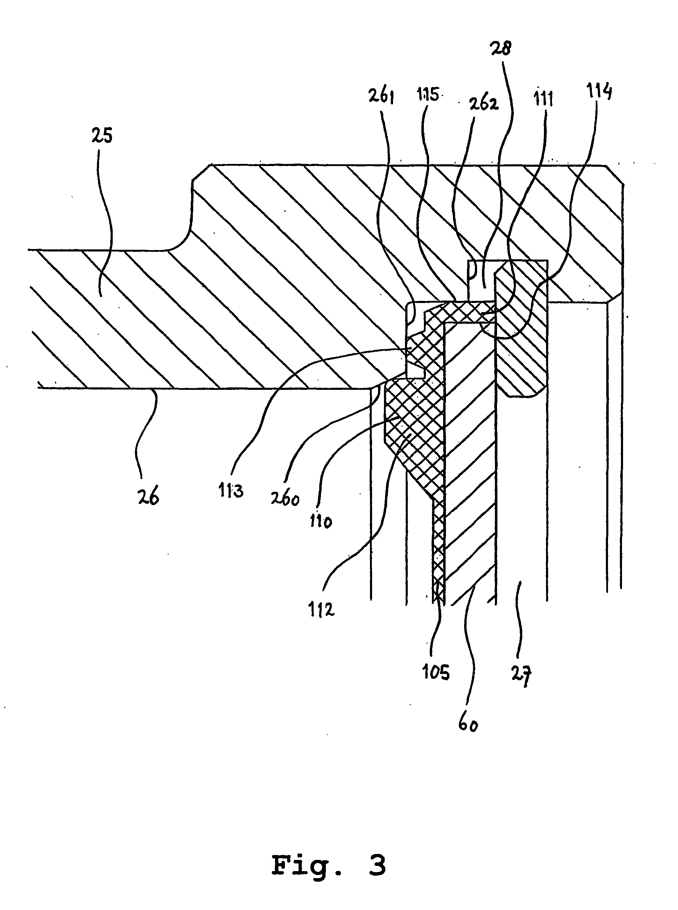

Figures 2 and 3 show a first embodiment of the outer sealing means according to the invention, which in the following will be referred to as outer sealing ring 110.

The outer sealing ring 110 comprises a receiving ring 111, an annular primary sealing part 112 and an annular secondary sealing part 113. Both the primary sealing part 112 and the secondary sealing part 113 project from the free surface of the layer 105; that is the surface which is not facing the balance shield 60. The radius of the primary sealing part 112 is smaller than the radius of the secondary sealing part 113.

In a mounted condition, the receiving ring 111 encompasses the balance shield 60 in a radial direction, an inner periphery 114 of the receiving ring 111 contacting the balance shield 60, and an outer periphery 115 of said receiving ring 111 contacting the inner surface 26 of the cylinder 25, at a position between the first step 261 and the second step 262. Further, a top surface of the secondary sealing part 113 contacts the first step 261, whereas a transition area between a top surface and a side surface of the primary sealing part 112 contacts the bevel 260.

As the sealing function of the outer sealing ring 110 is ensured by the primary sealing part 112 and the secondary sealing part 113, the receiving ring 111 can be omitted. Another possibility is to apply a receiving ring 111 having such dimensions that the receiving ring 111 only contacts the balance shield 60, and not the inner surface 26 of the cylinder 25.

In the mounted condition, the outer sealing ring 110 is pressed tightly against the inner surface 26 of the cylinder 25 by means of the snap ring 27, which also locks the balance shield 60. In this way, leaking out of the fluid in the compensation chamber 90 through a passage between the outer periphery 62 of the balance shield 60 and the inner surface 26 of the cylinder 25 is prohibited.

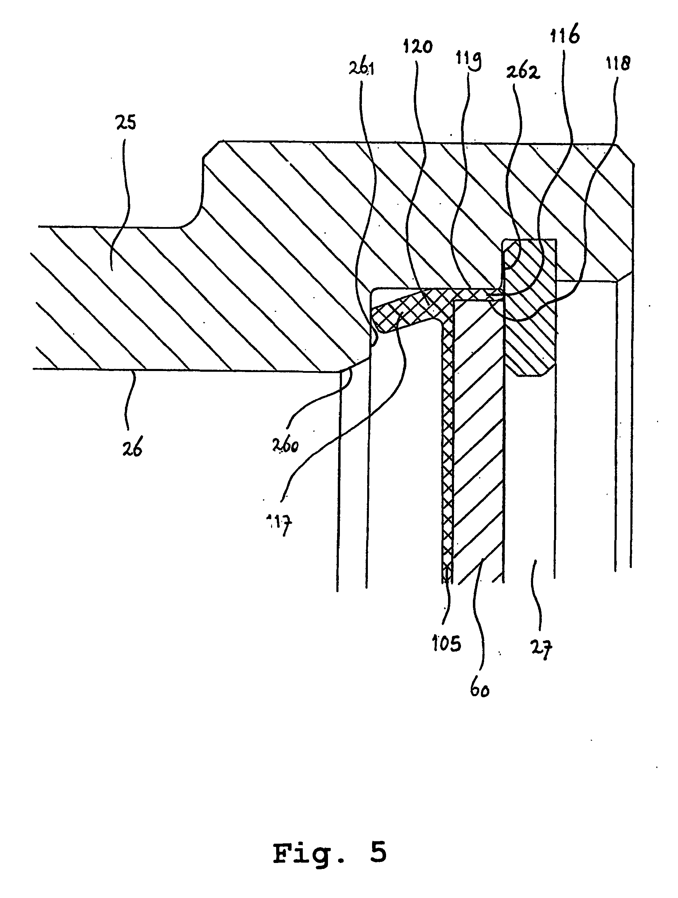

Figures 4 and 5 show a second embodiment of the outer sealing means according to the invention, which in the following will be referred to as outer lip-seal 120.

The outer lip-seal 120 comprises a receiving ring 116 and an annular oblique lip 117, which is directed inward in a radial direction, that is toward the secondary shaft 10.

In a mounted condition, the receiving ring 116 encompasses the balance shield 60 in a radial direction, an inner periphery 118 of the receiving ring 116 contacting the balance shield 60, and an outer periphery 119 of said receiving ring 116 contacting the inner surface 26 of the cylinder 25, at a position between the first step 261 and the second step 262. Further, a transition area between a top surface and a side surface of the lip 117 contacts the first step 261.

The outer lip-seal 120 is shaped such, that the lip 117 is relatively easily movable within an axial plane. This is very advantageous, for example in that it is relatively easy to press the balance shield 60 and the outer lip-seal 120 in the direction of the movable sheave 22 during mounting, thus enabling the snap ring 27 to be brought onto its proper position without much force. Also, the outer lip-seal 120 is able to perform its sealing function very well, mainly due to the fact that the oblique lip 117 is directed inward, while the pressure in the compensation chamber 90 is directed outward during operation of the continuously variable transmission. Moreover, wear of the snap ring 27 is compensated for by the inward direction of the lip 117. The lip 117 will always be pressed tightly against the first step 261 as a result of the fluid pressure acting in an outward direction. Therefore, possible wear of the snap ring 27 or possible clearance resulting from wear is automatically compensated for by a change of angle of the lip 117 within the axial plane.

The shown two possible shapes of the outer sealing means 110, 120 are only examples. There are many other possibilities which are within the range of the present invention. The outer sealing means 110, 120 do not necessarily have to be part of a layer 105 covering all of the front side of the balance shield 60. The layer 105 can also be partly covering the front side of the balance shield 60 or not be provided at all. Instead of being applied to the balance shield 60 by means of vulcanizing, the outer sealing means 110, 120 can also comprise a separate element.

It will be clear to a person skilled in the art that the scope of the present invention is not limited to the examples discussed in the foregoing, but that several amendments and modifications thereof are possible without deviating from the scope of the invention as defined in the attached claims.

For example, in the above, the present invention is described in the context of the secondary part 1 of the continuously variable transmission. The present invention can however also be applied in the context of the primary part of the continuously variable transmission, in case of said primary part comprising a balance shield 60 and a compensation chamber 90.

## Claims

1. Pulley device for a continuously variable transmission, comprising:
- a shaft (10);
- a movable sheave (22) being axially movable along the shaft (10);
- a cylinder (25) being substantially coaxially arranged with regard to the shaft (10) and being attached to the movable sheave (22);
- a plunger (40) which at an outer periphery (41) is sealed against an inner surface (26) of the cylinder (25) and which at an inner periphery (43) encompasses the shaft (10) at a fixed position with regard to the shaft (10);
- a balance shield (60) which encompasses the shaft (10) and which is having a fixed position with regard to the cylinder (25) and the movable sheave (22), the balance shield (60) being arranged such that the plunger (40) is located between the balance shield (60) and the movable sheave (22) in an axial direction **characterized by**
- outer sealing means (110, 120) contacting the balance shield (60) as well as the inner surface (26) of the cylinder (25) in a sealing manner.

2. Pulley device according to claim 1, wherein the outer sealing means comprise an annular lip-seal (120).

3. Pulley device according to claim 2, wherein the outer lip-seal (120) comprises an annular oblique lip (117), which is directed toward the shaft (10) and which contacts the inner surface (26) of the cylinder (25).

4. Pulley device according to claim 2 or 3, wherein the outer lip-seal (120) comprises an annular receiving ring (116) which encompasses an outer periphery (62) of the balance shield (60) in a radial direction.

5. Pulley device according to claim 4, wherein the receiving ring (116) contacts the balance shield (60) as well as the inner surface (26) of the cylinder (25).

6. Pulley device according to any of claims 2-5, wherein the outer lip-seal (120) is part of a layer (105) which at least partly covers a front side of the balance shield (60).

7. Pulley device according to claim 6, comprising an inner lip-seal (100) contacting the balance shield (60) as well as the plunger (40) in a sealing manner, wherein the inner lip-seal (100) is part of the layer (105).

8. Pulley device according to claim 6, comprising:
- a compensation cylinder (50) which encompasses the shaft (10) at a fixed position with regard to the shaft (10), being arranged such that the plunger (40) is located between the compensation cylinder (50) and the movable sheave (22) in an axial direction; and
- an inner lip seal (100) contacting the balance shield (60) as well as an outer surface (53) of the compensation cylinder (50) in a sealing manner, wherein the inner lip-seal (100) is part of the layer (105).

9. Pulley device according to any of claims 1-8, wherein the outer lip-seal (120) is made of rubber.

10. Pulley device according to any of claims 2-9, wherein the outer lip-seal (120) is applied to the balance shield (60) by means of vulcanizing.

11. Pulley device according to any of claims 1-10, wherein at least one filling hole (45) is provided in the plunger (40).

12. Balance shield (60) for a pulley device for a continuously variable transmission according to any of claims 1-11, wherein an annular outer lip-seal (120) is applied to the balance shield (60), near an outer periphery (62) of the balance shield (60).

13. Balance shield (60) according to claim 12, wherein the outer lip-seal (120) comprises an annular oblique lip (117), which is directed inward in a radial direction.

14. Balance shield (60) according to claim 12 or 13, wherein the outer lip-seal (120) comprises an annular receiving ring (116) which encompasses an outer periphery (62) of the balance shield (60) in a radial direction.

15. Balance shield (60) according to any of claims 12-14, wherein the outer lip-seal (120) is part of a layer (105) which at least partly covers a front side of the balance shield (60).

16. Balance shield (60) according to claim 15, wherein an annular inner lip-seal (100) is applied to the balance shield (60), near an inner periphery (61) of the balance shield (60), wherein the inner lip-seal (100) is part of the layer (105).

17. Balance shield (60) according to any of claims 12-16, wherein the outer lip-seal (120) is made of rubber.

18. Balance shield (60) according to any of claims 12-17, wherein the outer lip-seal (120) is applied to the balance shield (60) by means of vulcanizing.

## Patentansprüche

1. Riemenscheibenvorrichtung für ein stufenloses Getriebe, umfassend:
- eine Welle (10);
- eine bewegbare Antriebsscheibe (22), welche axial entlang der Welle (10) bewegbar ist;
- einen Zylinder (25), welcher im Wesentlichen hinsichtlich der Welle (10) koaxial angeordnet ist und welcher an der bewegbaren Antriebsscheibe (22) befestigt ist;
- einen Kolben (40), welcher an einer äußeren Peripherie (41) gegen eine innere Oberfläche (26) des Zylinders (25) abgedichtet ist, und welcher an einer inneren Peripherie (43) der Welle (10) an einer fixierten Position in Hinsicht auf die Welle (10) umgibt;
- einen Ausgleichsschild (60), welches die Welle (10) umgibt, und welches eine fixierte Position im Hinblick auf den Zylinder (25) und die bewegbare Antriebsscheibe (22) aufweist, wobei der Ausgleichsschild (60) derartig angeordnet ist, dass der Kolben (40) zwischen dem Ausgleichsschild (60) und der bewegbaren Antriebsscheibe (22) in einer axialen Richtung positioniert ist, **gekennzeichnet durch**
- äußere Dichtmittel (110, 120), welche den Ausgleichsschild (60) sowie die innere Oberfläche (26) des Zylinders (25) auf dichtende Weise kontaktieren.

2. Riemenscheibenvorrichtung gemäß Anspruch 1, wobei die äußeren Dichtmittel eine ringförmige Lippendichtung (120) umfassen.

3. Riemenscheibenvorrichtung gemäß Anspruch 2, wobei die äußere Lippendichtung (120) eine ringförmige schräge Lippe (117) umfasst, welche in Richtung der Welle (10) gerichtet ist, und welche die innere Oberfläche (26) des Zylinders (25) kontaktiert.

4. Riemenscheibenvorrichtung gemäß Anspruch 2 oder 3, wobei die äußere Lippendichtung (120) einen ringförmigen Aufnahmering (116) umfasst, welcher eine äußere Peripherie (62) des Ausgleichsschilds (60) in einer radialen Richtung umgibt.

5. Riemenscheibenvorrichtung gemäß Anspruch 4, wobei der Aufnahmering (116) den Ausgleichsschild (60) sowie die innere Oberfläche (26) des Zylinders (25) kontaktiert.

6. Riemenscheibenvorrichtung gemäß irgendeinem der Ansprüche 2 bis 5, wobei die äußere Lippendichtung (120) Teil einer Schicht (105) ist, welche zumindest teilweise eine vordere Seite des Ausgleichsschilds (60) abdeckt.

7. Riemenscheibenvorrichtung gemäß Anspruch 6, welche eine innere Lippendichtung (100) umfasst, welche den Ausgleichsschild (60) sowie den Kolben (40) auf dichtende Weise kontaktiert, wobei die innere Lippendichtung (100) Teil der Schicht (105) ist.

8. Riemenscheibenvorrichtung gemäß Anspruch 6, umfassend:
- einen Kompensationszylinder (50), welcher die Welle (10) an einer fixierten Position in Hinsicht auf die Welle (10) umgibt, welcher derartig angeordnet ist, dass der Kolben (40) zwischen dem Kompensationszylinder (50) und der bewegbaren Antriebsscheibe (22) in einer axialen Richtung positioniert ist; und
- eine innere Lippendichtung (100), welche den Ausgleichsschild (60) sowie eine äußere Oberfläche (53) des Kompensationszylinders (50) auf dichtende Weise umgibt, wobei die innere Lippendichtung (100) Teil der Schicht (105) ist.

9. Riemenscheibenvorrichtung gemäß irgendeinem der Ansprüche 1 bis 8, wobei die äußere Lippendichtung (120) aus Gummi hergestellt ist.

10. Riemenscheibenvorrichtung gemäß irgendeinem der Ansprüche 2 bis 9, wobei die äußere Lippendichtung (120) auf den Ausgleichsschild (60) mittels Vulkanisieren aufgebracht ist.

11. Riemenscheibenvorrichtung gemäß irgendeinem der Ansprüche 1 bis 10, wobei zumindest ein Füllloch (45) in dem Kolben (40) vorgesehen ist.

12. Ausgleichsschild (60) für eine Riemenscheibenvorrichtung für ein stufenloses Getriebe gemäß irgendeinem der Ansprüche 1 bis 11, wobei eine ringförmige äußere Lippendichtung (120) auf den Ausgleichsschild (60) nahe einer äußeren Peripherie (62) des Ausgleichsschilds (60) aufgebracht ist.

13. Ausgleichsschild (60) gemäß Anspruch 12, wobei die äußere Lippendichtung (120) eine ringförmige schräge Lippe (117) umfasst, welche in einer radialen Richtung nach innen gerichtet ist.

14. Ausgleichsschild (60) gemäß Anspruch 12 oder 13, wobei die äußere Lippendichtung (120) einen ringförmigen Aufnahmering (116) umfasst, welcher eine äußere Peripherie (62) des Ausgleichsschilds (60) in einer radialen Richtung umgibt.

15. Ausgleichsschild (60) gemäß irgendeinem der Ansprüche 12 bis 14, wobei die äußere Lippendichtung (120) Teil einer Schicht (105) ist, welche zumindest teilweise eine vordere Seite des Ausgleichsschilds (60) abdeckt.

16. Ausgleichsschild (60) gemäß Anspruch 15, wobei eine ringförmige innere Lippendichtung (100) auf den Ausgleichsschild (60) nahe einer inneren Peripherie (61) des Ausgleichsschilds (60) aufgebracht ist, wobei die innere Lippendichtung (100) Teil der Schicht (105) ist.

17. Ausgleichsschild (60) gemäß irgendeinem der Ansprüche 12 bis 16, wobei die äußere Lippendichtung (120) aus Gummi hergestellt ist.

18. Ausgleichsschild (60) gemäß irgendeinem der Ansprüche 12 bis 17, wobei die äußere Lippendichtung (120) auf den Ausgleichsschild (60) mittels Vulkanisieren aufgebracht ist.

## Revendications

1. Dispositif de poulie pour transmission à variation continue, comprenant :
- un arbre (10) ;
- un galet mobile (22) mobile axialement le long de l'arbre (10) ;
- un cylindre (25) placé de façon substantiellement coaxiale par rapport à l'arbre (10) et attaché au galet mobile (22) ;
- un piston (40) qui, au niveau d'une périphérie extérieure (41), est rendu étanche contre une surface intérieure (26) du cylindre (25) et qui, au niveau d'une périphérie intérieure (43), entoure l'arbre (10) en une position fixe par rapport à l'arbre (10) ;
- un écran d'équilibrage (60) qui entoure l'arbre (10) et qui a une position fixe par rapport au cylindre (25) et au galet mobile (22), l'écran d'équilibrage (60) étant agencé de telle manière que le piston (40) est situé entre l'écran d'équilibrage (60) et le galet mobile (22) dans une direction axiale, **caractérisé par** :
- un moyen d'étanchéité extérieur (110, 120) en contact avec l'écran d'équilibrage (60) ainsi qu'avec la surface intérieure (26) du cylindre (25) de manière étanche,

2. Dispositif de poulie selon la revendication 1, dans lequel le moyen d'étanchéité extérieur comprend un joint à lèvre annulaire (120).

3. Dispositif de poulie selon la revendication 2, dans lequel le joint à lèvre extérieur (120) comprend une lèvre oblique annulaire (117), qui est orientée vers l'arbre (10) et qui touche la surface intérieure (26) du cylindre (25).

4. Dispositif de poulie selon la revendication 2 ou 3, dans lequel le joint à lèvre extérieur (120) comprend une bague réceptrice annulaire (116) qui entoure une périphérie extérieure (62) de l'écran d'équilibrage (60) dans une direction radiale.

5. Dispositif de poulie selon la revendication 4, dans lequel la bague réceptrice (116) touche l'écran d'équilibrage (60) ainsi que la surface intérieure (26) du cylindre (25).

6. Dispositif de poulie selon l'une quelconque des revendications 2 à 5, dans lequel le joint à lèvre extérieur (120) fait partie d'une couche (105) qui couvre au moins partiellement une face avant de l'écran d'équilibrage (60).

7. Dispositif de poulie selon la revendication 6, comprenant un joint à lèvre intérieur (100) qui touche l'écran d'équilibrage (60) ainsi que le piston (40) de manière étanche, dans lequel le joint à lèvre intérieur (100) fait partie de la couche (105).

8. Dispositif de poulie selon la revendication 6, comprenant :
- un cylindre de compensation (50) qui entoure l'arbre (10) en une position fixe par rapport à l'arbre (10), agencé de telle manière que le piston (40) est situé entre le cylindre de compensation (50) et le galet mobile (22) dans une direction axiale ; et
- un joint à lèvre intérieur (100) qui touche l'écran d'équilibrage (60) ainsi qu'une surface extérieure (53) du cylindre de compensation (50) de manière étanche, dans lequel le joint à lèvre intérieur (100) fait partie de la couche (105).

9. Dispositif de poulie selon l'une quelconque des revendications 1 à 8, dans lequel le joint à lèvre extérieur (120) est en caoutchouc.

10. Dispositif de poulie selon l'une quelconque des revendications 2 à 9, dans lequel le joint à lèvre extérieur (120) est appliqué à l'écran d'équilibrage (60) au moyen d'une vulcanisation.

11. Dispositif de poulie selon l'une quelconque des revendications 1 à 10, dans lequel au moins un trou de remplissage (45) est prévu dans le piston (40).

12. Ecran d'équilibrage (60) pour un dispositif de poulie pour transmission à variation continue conforme à l'une quelconque des revendications 1 à 11, dans lequel un joint à lèvre extérieur annulaire (120) est appliqué à l'écran d'équilibrage (60), près d'une périphérie extérieure (62) de l'écran d'équilibrage (60).

13. Ecran d'équilibrage (60) selon la revendication 12, dans lequel le joint à lèvre extérieur (120) comprend une lèvre oblique annulaire (117), qui est orientée vers l'intérieur dans une direction radiale.

14. Ecran d'équilibrage (60) selon la revendication 12 ou 13, dans lequel le joint à lèvre extérieur (120) comprend une bague réceptrice annulaire (116) qui entoure une périphérie extérieure (62) de l'écran d'équilibrage (60) dans une direction radiale.

15. Ecran d'équilibrage (60) selon l'une quelconque des revendications 12 à 14, dans lequel le joint à lèvre extérieur (120) fait partie d'une couche (105) qui couvre au moins partiellement une face avant de l'écran d'équilibrage (60).

16. Ecran d'équilibrage (60) selon la revendication 15, dans lequel un joint à lèvre intérieur annulaire (100) est appliqué contre l'écran d'équilibrage (60), près d'une périphérie intérieure (61) de l'écran d'équilibrage (60), dans lequel le joint à lèvre intérieur (100) fait partie de la couche (105).

17. Ecran d'équilibrage (60) selon l'une quelconque des revendications 12 à 16, dans lequel le joint à lèvre extérieur (120) est en caoutchouc.

18. Ecran d'équilibrage (60) selon l'une quelconque des revendications 12 à 17, dans lequel le joint à lèvre extérieur (120) est appliqué à l'écran d'équilibrage (60) au moyen d'une vulcanisation.
